(19) **Europäisches Patentamt** / **European Patent Office** / **Office européen des brevets**

(11) **EP 3 879 621 B1**

(12) **EUROPEAN PATENT SPECIFICATION**

(45) Date of publication and mention
of the grant of the patent:
**13.11.2024  Bulletin 2024/46**

(21) Application number: **20894915.6**

(22) Date of filing: **17.12.2020**

(51) International Patent Classification (IPC):
*H01M 50/209* (2021.01)   *H01M 50/244* (2021.01)
*H01M 50/264* (2021.01)   *H01M 50/291* (2021.01)
*H01M 10/04* (2006.01)

(52) Cooperative Patent Classification (CPC):
**H01M 10/0481; H01M 50/209; H01M 50/244;
H01M 50/264; H01M 50/291;** Y02E 60/10;
Y02P 70/50

(86) International application number:
**PCT/CN2020/137078**

(87) International publication number:
**WO 2021/135956 (08.07.2021 Gazette 2021/27)**

(54) **BATTERY PACK AND APPARATUS**

BATTERIEPACK UND VORRICHTUNG

BLOC-BATTERIE ET APPAREIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.12.2019  CN 201922482964 U**

(43) Date of publication of application:
**15.09.2021  Bulletin 2021/37**

(73) Proprietor: **Contemporary Amperex Technology
(Hong Kong) Limited
Central, Central And Western District (HK)**

(72) Inventors:
• **CHEN, Sien
Ningde
Fujian 352100 (CN)**

• **XU, Shoujiang
Ningde
Fujian 352100 (CN)**
• **DAI, Xiaoshan
Ningde
Fujian 352100 (CN)**

(74) Representative: **Herrero & Asociados, S.L.
Edificio Aqua - Agustín de Foxá, 4-10
28036 Madrid (ES)**

(56) References cited:
**EP-A1- 2 735 041      EP-B1- 2 735 041
CN-A- 109 273 752      CN-A- 109 273 752
CN-A- 109 273 752      CN-A- 109 671 889
CN-U- 205 159 404      CN-U- 207 381 491
CN-U- 209 249 577      CN-U- 211 017 198
JP-A- 2010 244 894      JP-A- 2019 067 669**

**Description**

**TECHNICAL FIELD**

The present application relates to the technical field of energy storage devices, and in particular, to a battery pack and an apparatus

**BACKGROUND**

A battery module includes battery cells and a frame structure, where the frame structure encloses a cavity, the battery cells are stacked in the cavity in a length direction, the frame structure includes an end plate, and the end plate is located at an end part of the battery cells in the length direction for restricting movement of the battery cells in the length direction. At present, in order to improve energy density of the battery module, a weight of the frame structure should be reduced as much as possible, that is, a weight of the end plate shall be reduced as much as possible on the premise that the end plate is ensured to have sufficient strength.

EP2735041A1 discloses a power supply unit for an electric vehicle comprising a tray and at least one battery module fixed on the tray via a strip. Each battery module comprises: a housing having a bottom plate mounted onto the tray and first to fourth side plates disposed on the bottom plate, wherein the first and third side plates are opposed to each other in a thickness direction and the second and fourth side plates are opposed to each other in a front-rear direction; a battery pack, disposed in the housing, having a plurality of cells arranged along the thickness direction; and flexible members disposed between the first and third side plates and the battery pack respectively, for fastening the battery pack.

CN109273752A discloses a new energy source cylindrical battery module composition group structure, which mainly fixes battery modules into groups, and the whole module composition group structure is composed of a battery module, a packing belt fixing plate and a packing belt, the battery modules are compressed through the packing belt retightening, and the requirements of battery module structure design and electric performance parameters are met.

JP2010244894A discloses a battery module including: a battery stack, a positive electrode end plate and a negative electrode end plate, wherein the battery stack is configured by laminating a plurality of square batteries, having a positive electrode terminal plate and a negative electrode terminal plate made of conductive plate materials arranged while facing each other, in the facing direction of both the terminal plates, and the positive electrode end plate and the negative electrode end plate are arranged at one end and the other end in the laminating direction of the battery stack, respectively. The battery module is further provided with a strip-shaped binding member binding the positive electrode end plate and the negative electrode end plate.

**SUMMARY**

The invention is set out in the appended set of claims.

**BRIEF DESCRIPTION OF DRAWINGS**

FIG. 1 is a schematic structural diagram of an apparatus provided in the present application in a specific embodiment;
FIG. 2 is a schematic diagram of a partial structure of a battery pack provided in the present application in a specific embodiment;
FIG. 3 is a schematic structural diagram of a battery module in FIG. 2 in a second specific embodiment;
FIG. 4 is an exploded view of FIG. 3;
FIG. 5 is a top view of the battery module in FIG. 3;
FIG. 6 is a sectional view of the battery module in FIG. 5 in a direction B-B;
FIG. 7 is a schematic structural diagram of an end plate in FIG. 4;
FIG. 8 is a side view of the end plate in FIG. 7;
FIG. 9 is a partial enlarged view of a portion III in FIG. 6;
FIG. 10 is a schematic diagram of relationships of various components in FIG. 9 in size;
FIG. 11 is a top view of the battery pack in FIG. 2, where a battery module is a third specific embodiment;
FIG. 12 is a sectional view in a direction C-C of FIG. 11;
FIG. 13 is a partial enlarged view of a portion VI in FIG. 12;
FIG. 14 is a schematic structural diagram of an end plate in FIG. 12;
FIG. 15 is a side view of the end plate in FIG. 14;
FIG. 16 is a partial enlarged view of a portion IV in FIG. 9;
FIG. 17 is a partial enlarged view of a portion V in FIG. 9;
FIG. 18 is a top view of a battery module in FIG. 2 in a first specific embodiment;
FIG. 19 is a sectional view in a direction A-A of FIG. 18;
FIG. 20 is a schematic structural diagram of a cable tie in FIG. 19, where a first cable tie is in a slack state;
FIG. 21 is a partial enlarged view of a portion I in FIG. 19 in an embodiment;
FIG. 22 is a partial enlarged view of a portion I in FIG. 19 in another embodiment;
FIG. 23 is a top view of the cable tie in FIG. 20;
FIG. 24 is a partial enlarged view of a portion II in FIG. 23;
FIG. 25 is an exploded view of the cable tie in FIG. 20;
FIG. 26 is a schematic structural diagram of a cable tie in FIG. 19, where a first cable tie is in a tight state;

and
FIG. 27 is a partial enlarged view of a portion VII in FIG. 13.

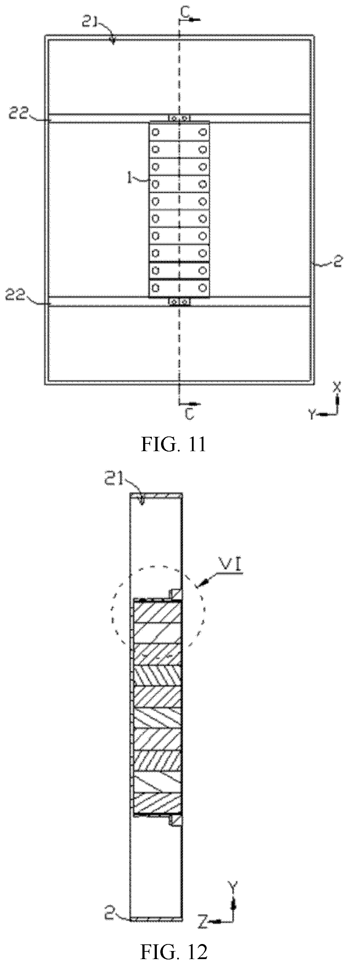

The embodiments of Figures 11-15 and 18-27 as well as the passages of the description referring thereto do not form part of claimed invention.

Reference signs:

D-apparatus; M-battery pack;
1-battery module;

11-battery cell arrangement structure; 111-battery cell;
12-cable tie; 121-first cable tie; 121a-first tape body; 121b-first connecting region; 121c-bending structure; 122-second cable tie; 122a-second tape body; 122b-second connecting region; 123-third cable tie;
13-end plate; 13 1 -first mounting groove; 131a-first bottom wall; 131b-first upper side wall; 131c-first lower side wall; 132-second mounting groove; 132a-second bottom wall;132b-second upper side wall; 132c-second lower side wall; 133-third mounting groove; 133a-third bottom wall;133b-third upper side wall; 133c-third lower side wall; 134-fourth mounting groove; 134a-fourth bottom wall; 134b-fourth upper side wall; 134c-fourth lower side wall; 135-mating part; 135a-a fifth bottom wall; 136-body part; 137-step part; 138-locking part; 138a-mounting hole; 139-lower end face;

2-box; 21-cavity; 22-mounting beam.

The accompanying drawings here, which are incorporated into the specification and constitute part of this specification, illustrate embodiments that comply with the present application, and are used to interpret the principle of the present application together with the specification.

## DESCRIPTION OF EMBODIMENTS

To understand technical solutions of the present application better, embodiments of the present application will be described in detail below with reference to the accompanying drawings. The following explanations are not according to the invention and are present for illustration purposes only.

It should be noted that the described embodiments are merely a part, but not all, of the embodiments of the present application. All of other embodiments obtained by those of ordinary skill in the art based on the embodiments of the present application without any inventive effort shall fall within the protection scope of the present application.

Terms used in the embodiments of the present application are merely for the purpose of describing particular embodiments, and are not intended to limit the present application. The use of singular forms of "a", "the" and "said" in the embodiments of the present application and the claims appended hereto is also intended to include a plural form, unless otherwise clearly indicated herein by context.

It should be understood that the term "and/or" used herein merely describes association relations between associated objects, and expresses three relations, for example, A and/or B may express three conditions, namely A exists separately, A and B exist simultaneously, and B exists separately. In addition, the character "/" herein generally indicates an "or" relationship between associated objects before and after the character.

It should be noted that the terms representing directions such as "up", "down", "left" and "right" described in the embodiments of the present application are described from the angles shown in the accompanying drawings, and should not be understood as a limitation on the embodiments of the present application. In addition, in the context, it should also be understood that when it is mentioned that an element is connected "on" or "under" another element, it can not only be directly connected "on" or "under" another element, but also be indirectly connected "on" or "under" another element through an intermediate element.

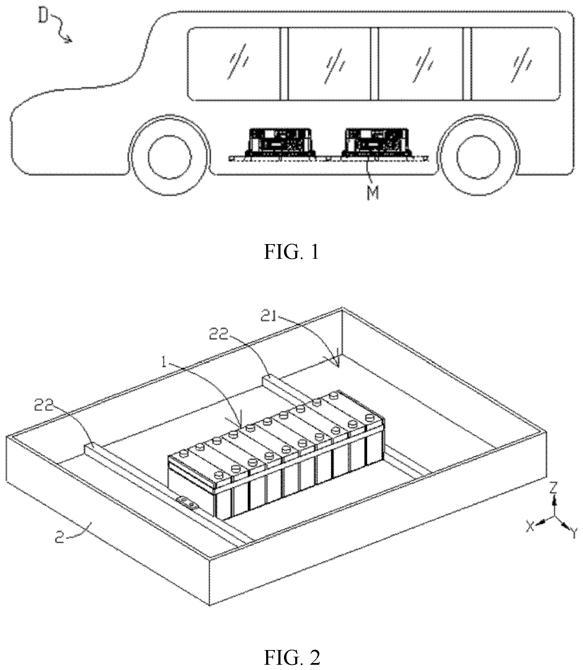

FIG. 1 is a schematic structural diagram of an apparatus provided in the present application in a specific embodiment, which does not form part of the invention.

As shown in FIG. 1, an embodiment of the present application provides an apparatus D in which battery cells 111 are used as a power supply, a battery pack M and a battery module 1 (refer to FIG. 2), where the apparatus D in which the battery cells 111 are used as the power supply includes mobile devices such as vehicles, ships, and light aeroplanes, and FIG. 1 shows a schematic diagram in which the apparatus D is a vehicle. The apparatus D includes a power source for providing driving force for the apparatus D, and the power source may be configured as a battery module 1 providing electric energy for the apparatus D. The driving force of the apparatus D may be all electric energy, or may include energy and another energy source (such as mechanical energy). The power source may be the battery module 1 (or the battery pack M), or the power source may be the battery module 1 (or the battery pack M), an engine, and the like. Therefore, any apparatus D in which battery cells 111 are used as a power supply is within the protection scope of the present application.

FIG. 2 is a schematic diagram of a partial structure of a battery pack provided in the present application in a specific embodiment, which does not form part of the invention.

As shown in FIG. 2, a battery pack M includes a case 2 and a battery module 1 of the present application, where the case 2 has a cavity 21, the battery module 1 is housed in the cavity 21, and one or more battery modules 1 are arranged in the cavity 21.

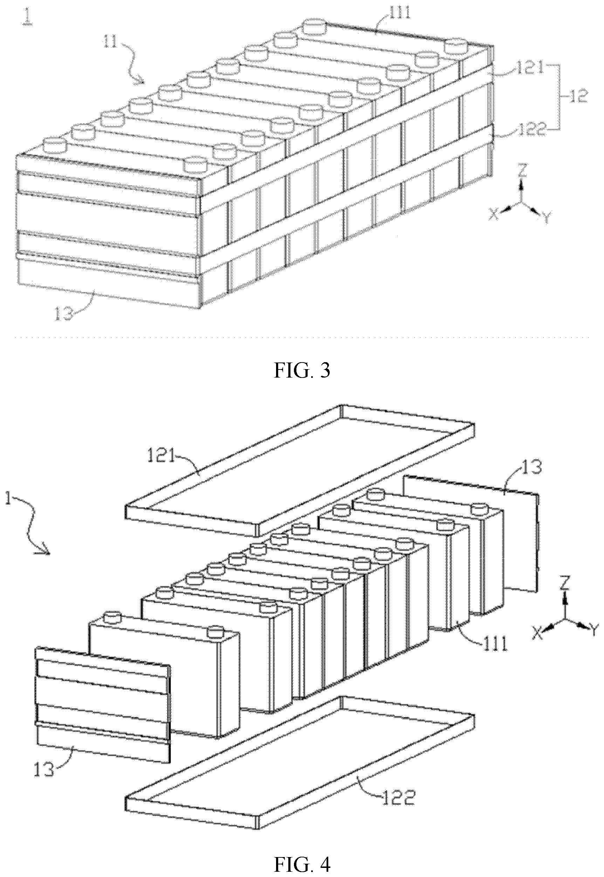

FIG. 3 is a schematic structural diagram of the battery module in FIG. 2 in a second specific embodiment; and FIG. 4 is an exploded view of FIG. 3, FIG. 3 and FIG. 4 do not form part of the invention.

More specifically, as shown in FIG. 3 and FIG. 4, the battery module 1 includes a plurality of battery cells 111 and a frame structure for fixing the battery cells 111, where the plurality of battery cells 111 are stacked on each other in a length direction X, and form a battery cell arrangement structure 11.

The frame structure for fixing the battery cells 111 may include an end plate 13, and the end plate 13 is located at an end part of the battery cell arrangement structure 11 in the length direction X. Meanwhile, in a specific embodiment, the frame structure may further include a side plate (not shown), two side plates are located on two sides of the battery cell arrangement structure 11 in a width direction Y, and the side plates are connected to end plates 13, so as to form the frame structure. In this embodiment, as shown in FIG. 3, the frame structure may not be provided with a side plate, the battery cells 111 are connected through a cable tie 12 after being stacked to form the battery cell arrangement structure 11, and in this case, end plates 13 and the cable tie 12 form the foregoing frame structure.

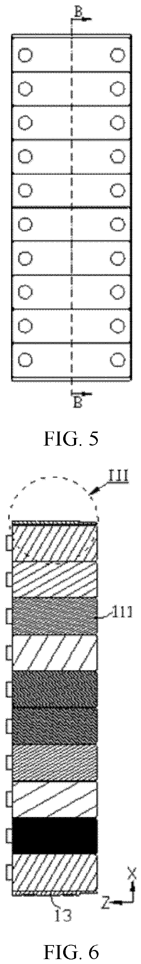

FIG. 5 is a top view of the battery module in FIG. 3; and FIG. 6 is a sectional view of the battery module in FIG. 5 in a direction B-B.

As shown in FIG. 5 and FIG. 6, the end plates 13 are disposed at end parts of the battery cell arrangement structure 11 of this embodiment in the length direction X, and the end plates 13 are fixed by the cable tie 12 to form the frame structure.

For the end plate 13 of the battery module 1, when its thickness is smaller, structural strength cannot be met. Therefore, in a general case, the end plate 13 is a flat-plate structure with a certain thickness, so as to meet requirements for strength of the battery module 1. However, when the thickness of the end plate 13 is greater, energy density of the battery module 1 is affected.

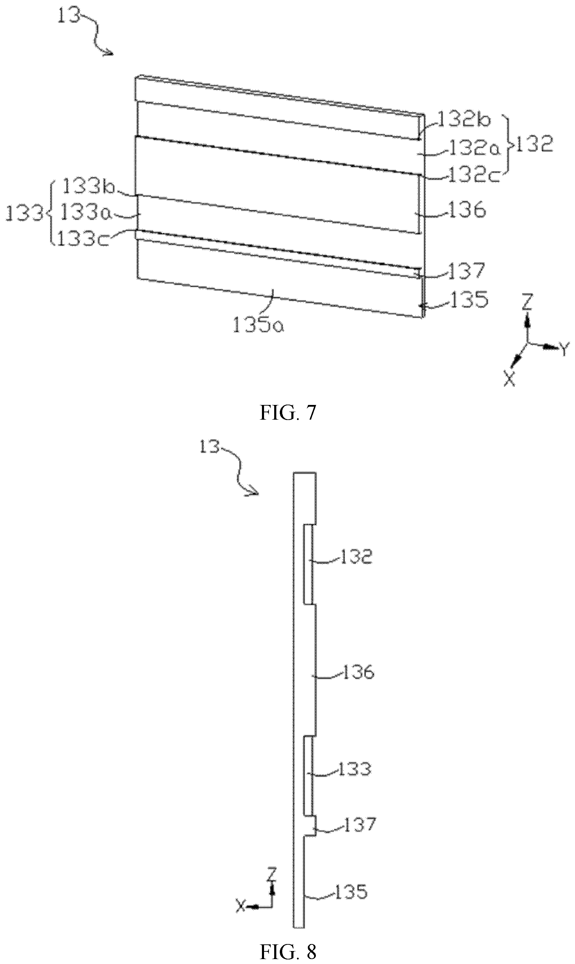

FIG. 7 is a schematic structural diagram of the end plate in FIG. 4.

To solve the foregoing technical problem, as shown in FIG. 7, the end plate 13 of the battery module 1 may include a first mating part 136 and a second mating part 135, where the second mating part 135 is located below the first mating part 136 in a height direction Z of the battery module 1, and a thickness of the second mating part 135 is smaller than a thickness of the first mating part 136. Meanwhile, the battery module 1 is fixed in the case 2 of the battery pack M, and the battery module 1 may be mated with and fixedly connected to the box 2 through the second mating part 135.

FIG. 8 is a side view of the end plate in FIG. 7.

As shown in FIG. 8, in this embodiment, the thicknesses of the first mating part 136 and the second mating part 135 of the end plate 13 are different, so that the end plate 13 is a structure without completely the same thickness at each position, thereby reducing a weight of the end plate 13 and improving energy density of the battery module 1 while ensuring that the end plate 13 has higher strength. In addition, when a thickness of the end plate 13 is not completely the same thickness at each position and the battery module 1 is mounted to the box 2, mating of the end plate 13 with another component in the box 2 could be easy to be achieved, and assembly efficiency is improved.

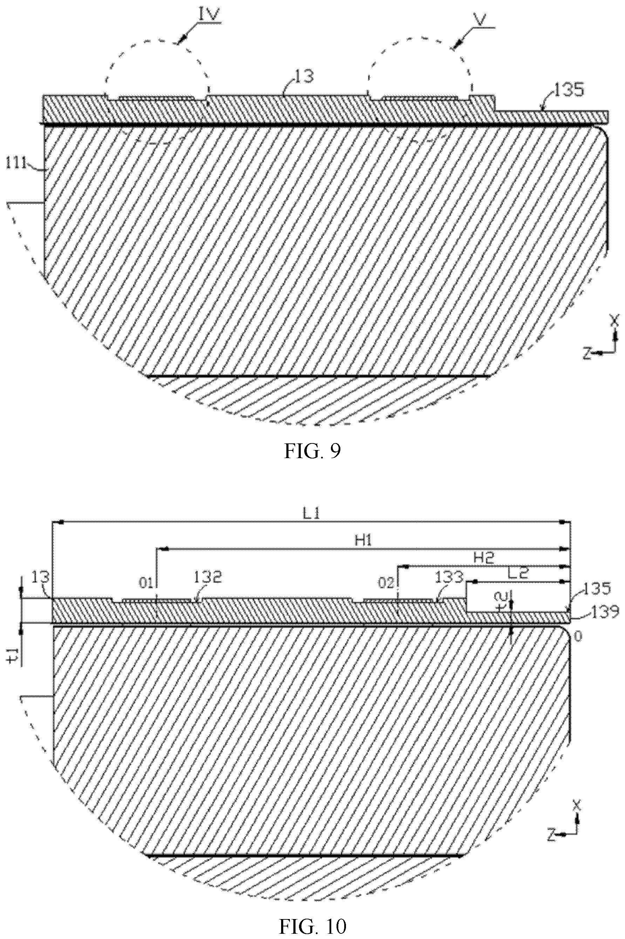

FIG. 9 is a partial enlarged view of a portion III in FIG. 6; and FIG. 10 is a schematic diagram of relationships of various components in FIG. 9 in size.

Specifically, as shown in FIG. 9 and FIG. 10, the thickness of the first mating part 136 is t1, and the thickness of the second mating part 135 is t2, where $t1 > t2 > 1/3 t1$.

In this embodiment, when $t1 > t2$, rigidity of the first mating part 136 is greater than rigidity of the second mating part 135, and when $t2 > 1/3 t1$, a difference between the rigidity of the first mating part 136 and the rigidity of the second mating part 135 is not too great, so as to reduce the risk of breaking the end plate 13 between the first mating part 136 and the mating part 135 under the action of expansion force due to a great difference between amounts of deformation of the two.

More specifically, as shown in FIG. 10, in the height direction Z, the end plate 13 has a first height L1, and the second mating part 135 has a second height L2, where $L2 \leq 1/3 L1$.

In this embodiment, the second height L2 of the second mating part 135 with the smaller thickness should not be too great, that is, not be greater than 1/3 of the overall height of the end plate 13, thereby preventing the overall strength of the end plate 13 from being lower when the height of the second mating part 135 is too great.

FIG. 11 is a top view of the battery pack in FIG. 2, where the battery module is a third specific embodiment.

Specifically, as shown in FIG. 11, a mounting beam 22 is disposed in the cavity 21 of the box 2, and in a length direction X of the battery module 1, the mounting beam 22 is located at an end part of a battery cell arrangement structure 11. Therefore, movement of the battery cell arrangement structure 11 in the length direction X could be restricted through mounting beams 22, and reliability of mounting the battery module 1 in the battery pack M could be improved. Meanwhile, the battery module 1 is mounted between two mounting beams 22, and end plates 13 are respectively close to the two mounting beams 22 and mated with the mounting beams 22.

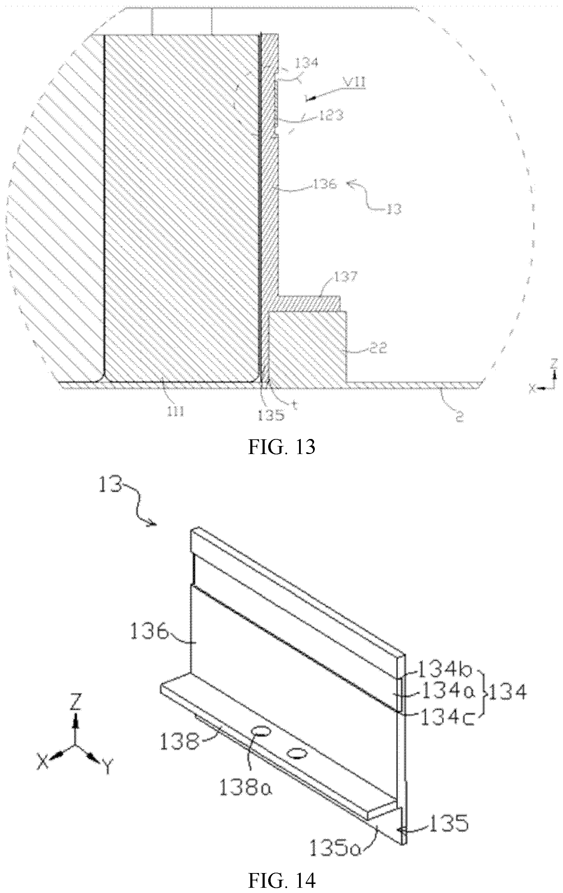

FIG. 12 is a sectional view in a direction C-C of FIG. 11; FIG. 13 is a partial enlarged view of a portion VI in FIG. 12; and FIG. 14 is a schematic structural diagram of the end plate in FIG. 12.

Specifically, as shown in FIG. 12, FIG. 13 and FIG. 14, the mounting beam 22 is mated with a second mating part 135 of a corresponding end plate 13, and in the length direction X, the second mating part 135 has a fifth bottom wall 135a, where the fifth bottom wall 135a faces the corresponding mounting beam 22, and a preset gap t is provided between the fifth bottom wall 135a and the mounting beam 22 in the length direction X. A range of t is t<0.5 millimeter (mm).

In this embodiment, mating of the end plate 13 with the mounting beam 22 could be achieved through the second mating part 135, and by changing the thickness of the second mating part 135, the battery module 1 could be mounted between two mounting beams 22, and could be adapted to space between the mounting beams 22. In addition, when the preset gap t is provided between the fifth bottom wall 135a of the second mating part 135 and the mounting beam 22 in the length direction X, the battery module 1 could be easily mounted between two mounting beams 22. Meanwhile, when battery cells 111 of the battery module 1 expand in the length direction X, the preset gap t could provide a distance by which the end plate 13 moves in the length direction X in the expansion process, and prevent the mounting beam 22 from exerting an excessively tight restraint effect on the second mating part 135 of the end plate 13 in the expansion process, thereby reducing the risk of breaking the end plate 13 caused by a difference between amounts of expansion of a first mating part 136 and the second mating part 135 with different thicknesses, and improving the service life of the end plate 13.

In addition, after the battery cells 111 in the battery module 1 expand, the end plate 13 moves toward the mounting beam 22 in the length direction X, so that the bottom wall 135a of the second mating part 135 abuts against the mounting beam 22, the second mating part 135 receives reaction force of the mounting beam 22, and the mounting beam 22 could restrain the end plate 13 in the length direction X. Meanwhile, when the battery cells 111 expand continuously, due to the restraint action of the mounting beam 22, the second mating part 135 no longer expands and deforms, while the first mating part 136 located above the second mating part 135 could expand and deform continuously. Therefore, in a direction from up to down, an amount of deformation of the end plate 13 gradually reduces from up to down. Therefore, the end plate 13 is set to be a structure with a great thickness above (the first mating part 136) and a small thickness below (the second mating part 135), so that rigidity of the end plate 13 at the first mating part 136 is greater, and rigidity of the end plate 13 at the second mating part 135 is smaller.

The preset gap t should not be too great or too small. When the preset gap t is too great, in the expansion process of the battery cells 111, the distance by which the end plate 13 moves in the length direction X under the action of expansion force is greater. When the battery module 1 includes a cable tie 12, an amount of deformation of the cable tie 12 is greater, which results in break of the cable tie 12 before the fifth bottom wall 135a of the second mating part 135 in the end plate 13 is in contact with the mounting beam 22. When the preset gap t is smaller, expansion space for the battery module 1 is smaller, which is not conducive to the release of the expansion force. Therefore, a size of the preset gap t could be reasonably selected by comprehensively considering factors in foregoing various aspect. For example, the preset gap t may be 0.2 mm, 0.4 mm, or the like.

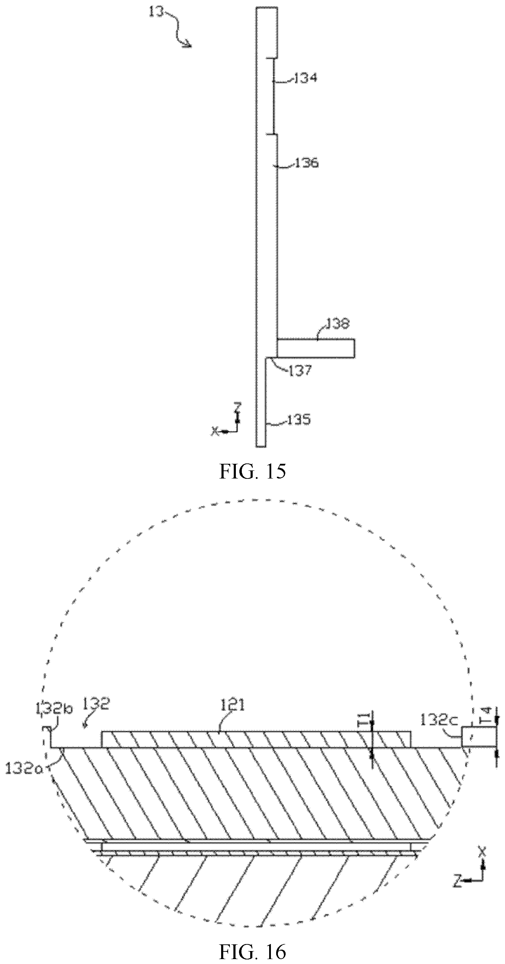

FIG. 15 is a side view of the end plate in FIG. 14.

As shown in FIG. 13 and FIG. 15, a step part 137 is formed between the first mating part 136 and the second mating part 135, and in a height direction Z, the mounting beam 22 abuts against the step part 137.

Therefore, in this embodiment, a height of the second mating part 135 is equal to a height of the mounting beam 22, so that when the battery module 1 is mounted to the box 2, the step part 137 of the end plate 13 could abut against an upper surface of the mounting beam 22 in the height direction Z, so that reliability of connection between the mounting beam 22 and the end plate 13 could be improved through the support in the height direction Z provided to the end plate 13 by the mounting beam 22. Further, as shown in FIG. 14 and FIG. 15, the end plate 13 may further include a locking part 138, where the locking part 138 protrudes from the end plate 13 and extends toward the mounting beam 22. Meanwhile, as shown in FIG. 15, a lower end face of the locking part 138 is flush with a step face of the step part 137, and when the battery module 1 is mounted in the box 2, the upper surface of the mounting beam 22 could abut against the step face of the step part 137 and the lower surface of the locking part 138. Meanwhile, the locking part 138 may further be provided with mounting holes 138a, and the mounting hole 138a is used to be connected to the mounting beam 22. Specifically, the mounting hole 138a may be a bolt hole, so that the end plate 13 and the mounting beam 22 can be connected by a bolt.

In another possible design, in the embodiment shown in FIG. 3 and FIG. 4, the battery pack M includes a first cable tie 121 and a second cable tie 122, where the first cable tie 121 and the second cable tie 122 surround an outer side of the battery cell arrangement structure 11, where tensile strength of the first cable tie 121 is greater than tensile strength of the second cable tie 122, and an elastic modulus of the first cable tie 121 is greater than an elastic modulus of the second cable tie 122, that is, strength of the first cable tie 121 is greater than strength of the second cable tie 122, and deformability of the second cable tie 122 is greater than deformability of the first cable tie 121. Based on this, the first cable tie 121 and the second cable tie 122 are arranged in the height direction Z of the battery module 1, and the second cable tie 122 is close to one end of the battery module 1 that is fixedly connected to the box 2, that is, the first cable tie 121 is far away from the end of the battery module 1 that is fixedly connected to the box 2, where the battery module 1 and the box 2 may be bonded specifically through an structural adhesive, or the battery module 1 may be locked to the box 2 by a bolt.

In this embodiment, in the height direction Z, one end of the battery module 1 is fixedly connected to the box 2. Therefore, at this position, reliability of grouping of each battery cell 111 is higher, and only a second cable tie 122 with lower tensile strength is required to be provided, the reliable grouping can be achieved. For one end of the battery module 1 that is not connected to the box 2, each battery cell 111 need to be grouped by a structure with higher strength. That is, in this embodiment, the first cable tie 121 with higher tensile strength is disposed to be far away from one end of the battery module 1 that is fixedly connected to the box 2, so that the grouping of each battery cell 111 at this position is achieved through the first cable tie 121 with higher tensile strength, and grouping efficiency thereof is improved.

Meanwhile, when the battery cells 111 of the battery module 1 expand, a position of the battery cell arrangement structure 11 that is far away from one end connected to the box 2 expands and deforms to be large. Therefore, when the first cable tie 121 with higher tensile strength is disposed at this position, the risk of breaking the first cable tie 121 under the action of expansion force could be reduced.

The first cable tie 121 may be specifically a metal material, and the second cable tie 122 may be specifically a plastic material. For a first cable tie 121 and a second cable tie 122 with the same volume, a weight of the second cable tie 122 is smaller than a weight of the first cable tie 121.

Therefore, in this embodiment, cable ties with different tensile strength are provided according to different strength requirements at different positions, which could achieve grouping of the battery module 1 and has higher reliability of the grouping. Meanwhile, when a second cable tie 122 with lower tensile strength is disposed at a position with a lower strength requirement, a weight of the battery module 1 could also be reduced, and energy density thereof could be improved.

Specifically, as shown in FIG. 7 and FIG. 8, the end plate 13 is provided with a second mounting groove 132 and a third mounting groove 133, and in the height direction Z of the battery module 1, the second mounting groove 132 is located above the third mounting groove 133, where a portion of the foregoing first cable tie 121 (refer to a portion of the first cable tie 121 in the width direction) is located at the second mounting groove 132. Meanwhile, a portion of the foregoing second cable tie 122 (refer to a portion of the second cable tie 122 in the width direction) is located at the third mounting groove 133.

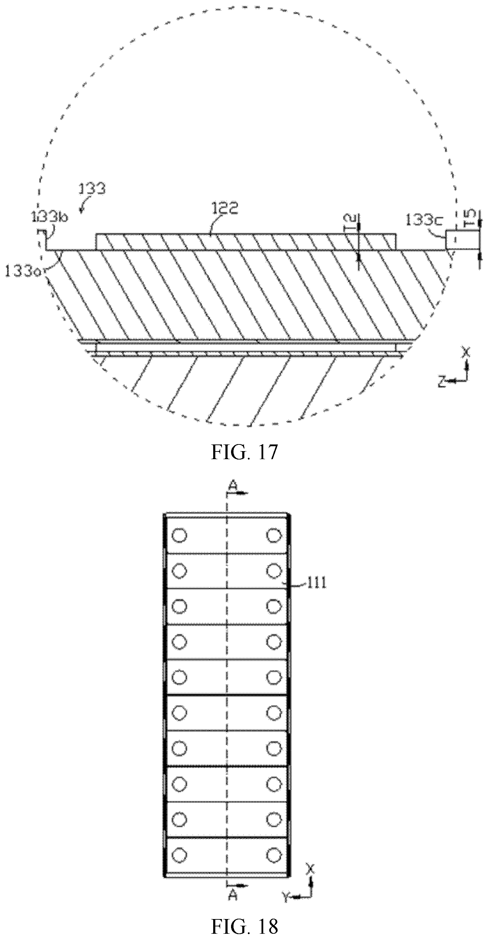

FIG. 16 is a partial enlarged view of a portion IV in FIG. 9; and FIG. 17 is a partial enlarged view of a portion V in FIG. 9.

Specifically, as shown in FIG. 16 and FIG. 17, in the length direction X of the battery module 1, the second mounting groove 132 has a second bottom wall 132a, and when a portion of the first cable tie 121 is located at the second mounting groove 132, the first cable tie 121 abuts against the second bottom wall 132a. Meanwhile, in the height direction Z, the second mounting groove 132 includes a second upper side wall 132b and a second lower side wall 132c oppositely arranged, and the first cable tie 121 is located between the second upper side wall 132b and the second lower side wall 132c. Meanwhile, the first cable tie 121 may or may not abut against the two side walls. Similarly, in the length direction X of the battery module 1, the third mounting groove 133 has a third bottom wall 133a, and when a portion of the second cable tie 122 is located at the third mounting groove 133, the second cable tie 122 abuts against the third bottom wall 133a. Meanwhile, in the height direction Z, the third mounting groove 133 includes a third upper side wall 133b and a third lower side wall 133c oppositely arranged, and the second cable tie 122 is located between the third upper side wall 133b and the third lower side wall 133c. Meanwhile, the second cable tie 122 may or may not abut against the two side walls.

In this embodiment, by disposing the second mounting groove 132 and the third mounting groove 133 on the end plate 13, the second upper side wall 132b and the second lower side wall 132c of the second mounting groove 132 could restrain movement of the first cable tie 121 in the height direction Z, and the third upper side wall 133b and the third lower side wall 133c of the third mounting groove 133 could restrain movement of the second cable tie 122 in the height direction Z, thereby improving reliability of connection between the first cable tie 121 and the second cable tie 122 and the end plate 13.

As shown in FIG. 16 and FIG. 17, in the length direction X, a depth of the second mounting groove 132 is T4, and a depth of the third mounting groove 133 is T5; and a thickness of the first cable tie 121 is T1, and a thickness of the second cable tie 122 is T2, where 0<T4-T1<0.5 mm, and 0<T5-T2<0.5 mm.

In this embodiment, the depth T4 of the second mounting groove 132 is greater than the thickness T1 of the first cable tie 121, and the depth T5 of the third mounting groove 133 is greater than the thickness T2 of the second cable tie 122, so that after the first cable tie 121 and the second cable tie 122 are provided, the first cable tie 121 and the second cable tie 122 do not increase a size of the battery module 1 in the length direction X, which is conducive to the spatial arrangement of the battery module 1. Meanwhile, the depth T4 of the second mounting groove 132 and the depth T5 of the third mounting groove 133 should not be too great (T4-T1<0.5 mm, and T5-T2<0.5 mm), thereby avoiding the strength of the end plate 13 to be too low at positions at which the second mounting groove 132 and the third mounting groove 133 are disposed caused by the excessive depths of the second mounting groove 132 and the third mounting groove 133, and improving the service life of the end plate 13.

More specifically, as shown in FIG. 10, in the height direction X, the second mounting groove 132 has a first center line O1, and in the height direction Z, and a first distance H1 is provided between the first center line O1 and a lower end face 139 of the end plate 13. Similarly, in the height direction X, the third mounting groove 133 has a second center line O2, and in the height direction Z, a second distance H2 is provided between the second center line O2 and the lower end face 139. Meanwhile, the end plate 13 has a first height L1 in the height direction Z, where H1≥2/3L1, and 3/4L1≥H2≥1/4L1.

In this embodiment, the first distance H1 could represent a set height of the second mounting groove 132 relative to the lower end face 139 of the end plate 13. Similarly, the second distance H2 could represent a set height of the third mounting groove 133 relative to the lower end face of the end plate 13. One end of the battery module 1 that is close to the lower end face 139 of the end plate 13 is fixedly connected to the box 2. Therefore, a set position of the second mounting groove 132 is higher than a set position of the third mounting groove 133, that is, H1>H2.

Meanwhile, after the second mounting groove 132 and the third mounting groove 133 arranged in the height direction Z are disposed on the end plate 13, the thickness of the end plate 13 at each position is different, so that strength and rigidity of the end plate 13 at each position are different. When H1≥2/3L1 and 3/4L1≥H2≥1/4L1, a distance between the second mounting groove 132 and the third mounting groove 133 is not too great or too small, so that after the two mounting grooves are provided, force and deformation of the end plate 13 are still relatively even.

In addition, in the embodiment shown in FIG. 8, the end plate 13 further includes a first mating part 136 and a second mating part 135, where the second mounting groove 132 and the third mounting groove 133 are disposed at the first mating part 136, and in the height direction Z, the second mating part 135 is located below the third mounting groove 133. In this case, the battery module 1 and the box 2 may be bonded, and may also be connected to the mounting beam 22 through the end plate 13 and. Meanwhile, the battery cell arrangement structure 11 of the battery module 1 is grouped through the first cable tie 121 and the second cable tie 122.

To sum up, in this embodiment, the first cable tie 121 and the second cable tie 122 with different materials are arranged at intervals in the height direction Z. However, in other embodiments, the first cable tie 121 and the second cable tie 122 with different materials are approximately at the same height, and the first cable tie 121 is located on an inner side of the second cable tie 122.

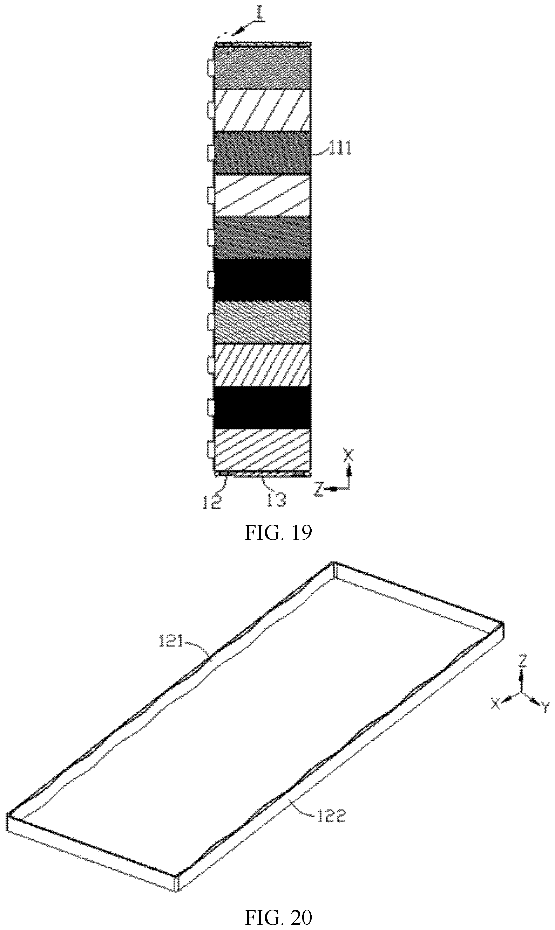

FIG. 18 is a top view of the battery module in FIG. 2 in a first specific embodiment; FIG. 19 is a sectional view in a direction A-A of FIG. 18; and FIG. 20 is a schematic structural diagram of a cable tie in FIG. 19, where a first cable tie is in a slack state.

Specifically, as shown in FIG. 18, FIG. 19 and FIG. 20, the cable tie 12 may be specifically a band-like structure and surround an outer side of the battery cell arrangement structure 11, and the cable tie 12 includes at least a first cable tie 122 and a second cable tie 122 with different materials, where at least a portion of the first cable tie 121 is located on one side of the second cable tie 122 that is close to the battery cells 111, that is, at least a portion of the first cable tie 121 is located on an inner side of the second cable tie 122, where the inner side refers to one side close to the battery cell arrangement structure 11, and an outer side refers to one side far away from the battery cell arrangement structure 11.

Specifically, tensile strength of the first cable tie 121 may be greater than tensile strength of the second cable tie 122, where the tensile strength (or strength limit) represents a maximum stress value a material bears before being broken. Therefore, the tensile strength is greater, and bearing ability of the material is greater. That is, when the material is subjected to the same external force, it is not easy to be broken. In this embodiment, strength of the first cable tie 121 located on the inner side is higher than that of the second cable tie 122.

Meanwhile, an elastic modulus of the first cable tie 121 is greater than an elastic modulus of the second cable tie 122. According to Hooke's Law, stress and strain of a material in an elastic deformation stage are in a proportional relationship, where a proportional coefficient of the proportional relationship is an elastic modulus, and the elastic modulus is used to measure the magnitude of ability of the material to resist elastic deformation. Therefore, the elastic modulus is greater, stress required to elastically deform the material is greater, and rigidity of the material is greater (elastic deformation is less), that is, when the stress is the same, the elastic modulus is greater, and the elastic deformation is less. Therefore, in this embodiment, the first cable tie 121 located on the inner side is less likely to elastically deform than the second cable tie 122.

More specifically, the foregoing first cable tie 121 may be a metal material, and the foregoing second cable tie 122 may be a plastic material. For example, the material of the first cable tie 121 may specifically be metal such as stainless steel, aluminum, or carbon steel, and the material of the second cable tie 122 may specifically be non-metal such as PET (polyester) plastic. It can be understood that a tensile strength of the first cable tie 121 with the metal material is greater than a tensile strength of the second cable tie 122 with the plastic material. Meanwhile, an elastic modulus of the first cable tie 121 with the metal material is greater than an elastic modulus of the second cable tie 122 with the plastic material. In a possible design, as shown in FIG. 20, in the height direction Z of the battery module 1, at least a portion of the first cable tie 121 abuts against the second cable tie 122, that is, in the height direction Z, there is an overlap between the first cable tie 121 and the second cable tie 122, and the two abut against each other at the overlapping position. When there is relative movement between the first cable tie 121 and the second cable tie 122, there is frictional resistance at the position where the two abut against each other, thereby reducing tendency of the relative movement of the two.

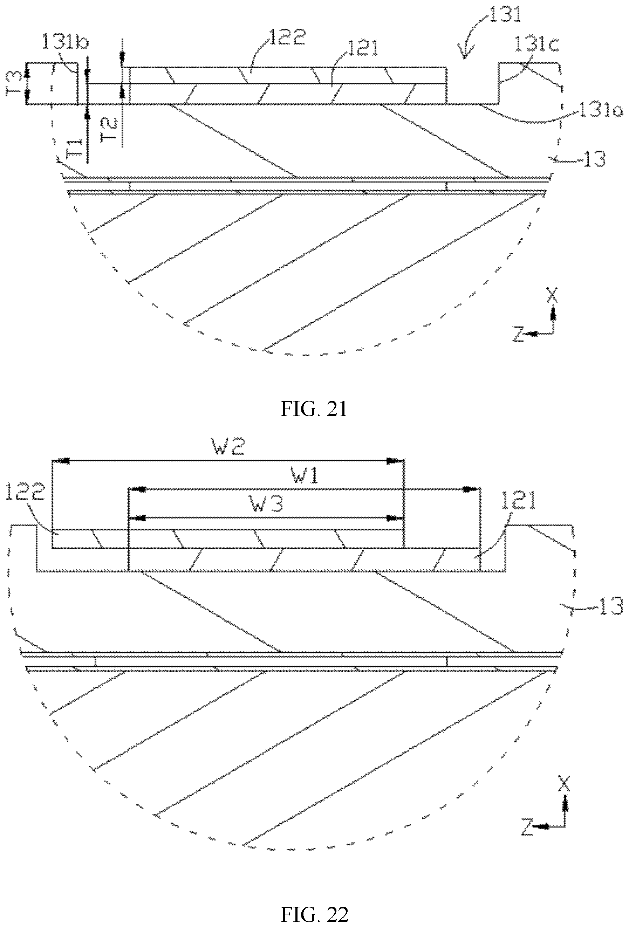

FIG. 21 is a partial enlarged view of a portion I in FIG. 19 in an embodiment; and FIG. 22 is a partial enlarged view of a portion I in FIG. 19 in another embodiment.

Specifically, as shown in FIG. 21 and FIG. 22, the first cable tie 121 has a first width W1, and the second cable tie 122 has a second width W2. In an example of the first cable tie 121, the first cable tie 121 has three sizes of length, width and thickness. In the first cable tie 121 in a band-like structure, a size with the largest value represents the length of the first cable tie 121 (that is, a circumference of the first cable tie 121), a size with the smallest value represents the thickness of the first cable tie 121, and a size with a value between the largest value and the smallest value represents the width of the first cable tie 121. Based on the angles of view shown in FIG. 21 and FIG. 22, the first width W1 of the first cable tie 121 refers to a size in the height direction Z of the battery module 1.

In a specific embodiment, W1≤W2, that is, the width of the first cable tie 121 is smaller than or equal to the width of the second cable tie 122. In the height direction Z, an abutment height of the second cable tie 122 and the first cable tie 121 is W3, where

$$W3 \geq \frac{1}{2}W1$$

, that is, the abutment height of the first cable tie 121 and the second cable tie 122 is greater than or equal to half of the width of the one with a smaller width.

In a possible design, as shown in FIGS. 18 to 22, the end plates 13 of the battery module 1 are located at two ends of the battery cell arrangement structure 11 in the length direction X, and the two end plates 13 and the battery cell arrangement structure 11 are fastened through the cable tie 12. Specifically, as shown in FIG. 21 and FIG. 22, the end plate 13 is provided with a first mounting groove 131, and in the height direction Z, a portion of the first cable tie 121 (referring to a portion of the first cable tie 121 in the width direction) and a portion of the second cable tie 122 (referring to a portion of the second cable tie 122 in the width direction) are located at the first mounting groove 131, and the first cable tie 121 at least partially abuts against the second cable tie 122 in the mounting groove 131.

Specifically, as shown in FIG. 21, in the length direction X of the battery module 1 (that is, a thickness direction of the end plate 13), a depth of the first mounting groove 131 is T3, a thickness of the first cable tie 121 is T1, and a thickness of the second cable tie 122 is T2, where T1+T2≤T3≤T1+T2+1 mm.

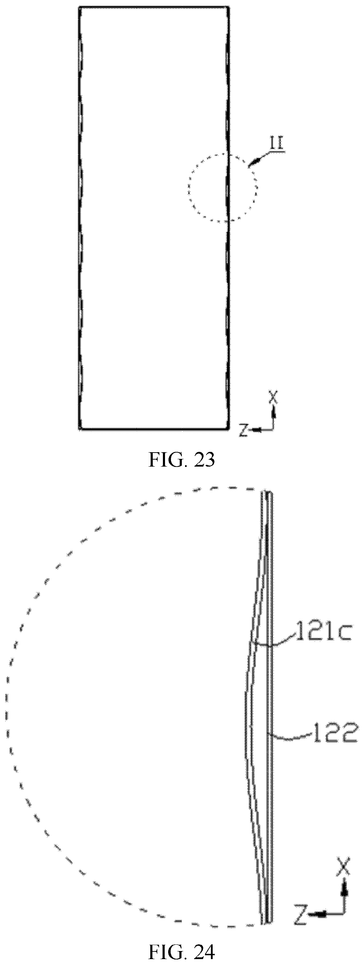

FIG. 23 is a top view of FIG. 20; and FIG. 24 is a partial enlarged view of a portion II in FIG. 23.

On the other hand, as shown in FIG. 23 and FIG. 24, the first cable tie 121 located on the inner side may further include a bending structure 121c. Therefore, when the first cable tie 121 receives force, the bending structure 121c could deform.

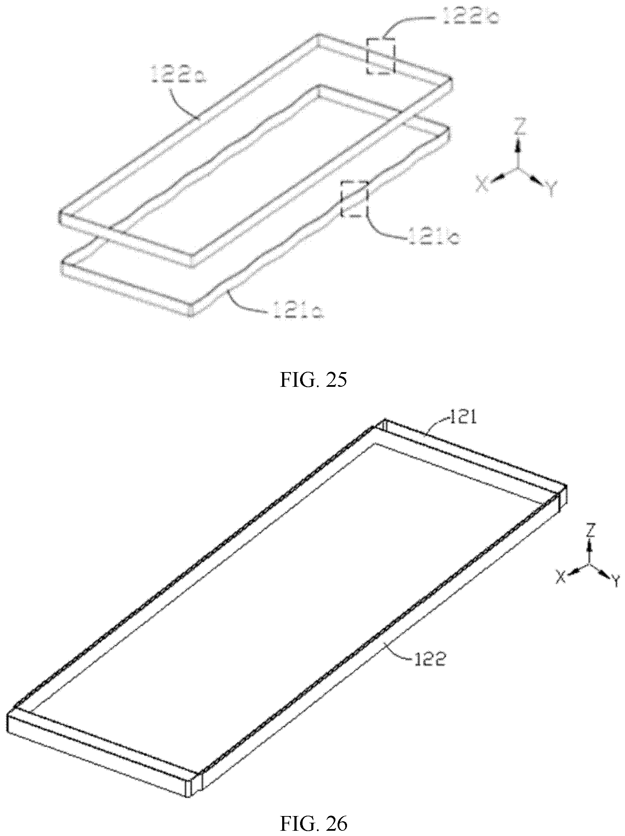

FIG. 25 is an exploded view of FIG. 20.

In a specific embodiment, as shown in FIG. 20, FIG. 23 and FIG. 25, the first cable tie 121 may be an annular wave structure, that is, the first cable tie 121 may include a plurality of foregoing bending structures 121c, and bending directions of at least two bending structures 121c are opposite. Meanwhile, each bending structure 121c is an arc structure, an arc is used to transition between adjacent bending structures 121c, so as to form the first cable tie 121 in the wave structure. Moreover, in this embodiment, the wave structure of the first cable tie 121 may be formed by stamping in a processing process.

In a possible design, as shown in FIG. 25, the first cable tie 121 and the second cable tie 122 are annular structures that could surround the battery cell arrangement structure 11, and the two are shaped into annular structures through a band-like structure. Specifically, the first cable tie 121 is formed by a first tape body 121a, two end parts of the first tape body 121a are connected, which could form the first cable tie 121, and a first connecting region 121b is formed at the connections, where the two connections of the first cable tie 121a could surround the battery cell arrangement structure 11 after they need to meet the connection to form the first cable tie 121. Similarly, the second cable tie 122 is formed by a second tape body 122a, two end parts of the second tape body 122a are connected, which could form the second cable tie 122, and a second connecting region 122b is formed at the connections, where the two connections of the second cable tie 122b could surround the battery cell arrangement structure 11 after they need to meet the connection to form the second cable tie 122.

FIG. 26 is a schematic structural diagram of a cable tie in FIG. 19, where a first cable tie is in a tight state.

In another specific embodiment, as shown in FIG. 26, a length of the first cable tie 121 is greater than a circumference of the battery cell arrangement structure 11, and the length of the first cable tie 121 is greater than a length of a second cable tie 122. As described above, the length of the first cable tie 121 in an annular structure refers to a circumference of the first cable tie 121. When the second cable tie 122 surrounds an outer side of the first cable tie 121, the second cable tie 122 with the smaller length could exert extrusion force on the first cable tie 121 with the greater length, so that the first cable tie 121 forms one or more bending structures 121c, and when the first cable tie 121 receives force, each bending structure 121 could deform.

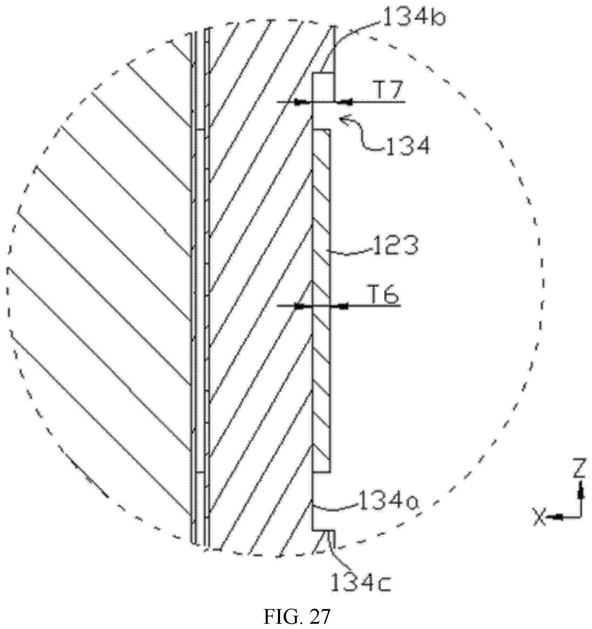

FIG. 27 is a partial enlarged view of a portion VII in FIG. 13. The following embodiments are not according to the invention and are present for illustration purposes only.

In a specific embodiment, as shown in FIG. 13 and FIG. 27, the battery pack M may further include a third cable tie 123, and in the height direction Z, the third cable tie 123 surrounds an upper part of the battery cell arrangement structure 11 that is far away from the mounting beam 22.

In this embodiment, when the expansion of the battery cells 111 of the battery module 1 allows the end plates 13 to move close to the mounting beams 22, two mounting beams 22 could play a role of restraining the end plate 13 through the second mating part 135, thereby improving reliability of grouping of the battery module 1 at the position corresponding to the mounting beam 22. Meanwhile, in order to improve reliability of the battery module 1 at the upper end far away from the mounting beam 22, the battery module 1 may further be provided with the third cable tie 123, and through the third cable tie 123 and the mounting beams 22, the battery cell arrangement structure 11 could be restrained in the height direction Z, and reliability of grouping of the battery cells 111 could be improved.

Specifically, as shown in FIG. 13, FIG. 14 and FIG. 27, the end plate 13 is provided with a fourth mounting groove 134, and in the height direction Z, a portion of the third cable tie 123 (refer to a portion of the third cable tie 123 in the width direction) is located at the fourth mounting groove 134. In this embodiment, in the length direction X, the fourth mounting groove 134 has a fourth bottom wall 134a, and when a portion of the third cable tie 123 is located at the fourth mounting groove 134, the third cable tie 123 abuts against the fourth bottom wall 134a in the length direction X. Meanwhile, in the height direction Z, the fourth mounting groove 134 has a fourth upper side wall 134b and a fourth lower side wall 134c oppositely arranged, and in the height direction X, a portion of the third cable tie 123 is located between the fourth upper side wall 134b and the fourth lower side wall 134c.

In a specific embodiment, in the height direction Z, the third cable tie 123 may abut against both the fourth upper side wall 134b and the fourth lower side wall 134c, or the third cable tie 123 may not abut against at least one side wall of the fourth mounting groove 134. In the embodiment shown in FIG. 27, in the height direction Z, the third cable tie 123 does not abut against the fourth upper side wall 134b and the fourth lower side wall 134c.

In this embodiment, by disposing the fourth mounting groove 134 on the end plate 13, the fourth upper side wall 134b and the fourth lower side wall 134c of the fourth mounting groove 134 could restrain movement of the third cable tie 123 in the height direction Z, thereby improving reliability of connection between the third cable tie 123 and the end plate 13.

As shown in FIG. 27, the third cable tie 123 has a sixth thickness T6, and a depth of the fourth mounting groove 134 is T7, where $0<T7-T6<0.5$ mm.

In this embodiment, the depth T7 of the fourth mounting groove 134 is greater than the sixth thickness T6 of the third cable tie 123, so that after the third cable tie 123 is provided, the third cable tie 123 does not increase a size of the battery module 1 in the length direction X, which is conducive to the spatial arrangement of the battery module 1. Meanwhile, the depth of the fourth mounting groove 134 should not be too great ($T7-T6<0.5$ mm), thereby avoiding the strength of the end plate 13 to be too low at a the position at which the fourth mounting groove 134 is disposed caused by the excessive depth of the fourth mounting groove 134, and improving the service life of the end plate 13.

**Claims**

1. A battery pack (M), comprising a box (2) and a battery module (1), the battery module (1) being fixed in the box (2), wherein the battery module (1) comprises:

a battery cell arrangement structure (11) comprising a plurality of battery cells (111) stacked on each other; and
an end plate (13), the end plate (13) being located at an end part of the battery cell arrangement structure (11) in a length direction (X), and the end plate (13) comprising a first mating part (136) and a second mating part (135);
wherein the second mating part (135) is located below the first mating part (136) in a height direction (Z) of the battery module (1), and a thickness of the first mating part (136) is t1, a thickness of the second mating part (135) is t2, t1 >t2, a direction of the thickness is parallel with the length direction (X);
wherein a mounting beam (22) is disposed in a cavity (21) of the box (2), and in the length direction (X) of the battery module (1), the mounting beam (22) is located at the end part of the battery cell arrangement structure (11);
in the length direction (X), the second mating part (135) has a fifth bottom wall (135a) mated with the mounting beam (22), a preset gap t is provided between the fifth bottom wall (135a) and the mounting beam (22) in the length direction (X);
a step part (137) is formed between the first mating part (136) and the second mating part (135), and in the height direction (Z), the mounting beam (22) abuts against the step part (137);
the first mating part (136) is provided with a second mounting groove (132) and a third mounting groove (133), and in the height direction (Z) of the battery module (1), the second mounting groove (132) is located above the third mounting groove (133);
the battery pack (M) comprises a first cable tie (121) and a second cable tie (122), and the first cable tie (121) and the second cable tie (122) both surround an outer side of the battery cell arrangement structure (11);
a portion of the first cable tie (121) is located at the second mounting groove (132), and a portion of the second cable tie (122) is located at the third mounting groove (133); and

a tensile strength of the first cable tie (121) is greater than a tensile strength of the second cable tie (122), and an elastic modulus of the first cable tie (121) is greater than an elastic modulus of the second cable tie (122);

the first cable tie (121) and the second cable tie (122) are arranged in the height direction (Z) of the battery module (1), and the second cable tie (122) is close to one end of the battery module (1) that is fixedly connected to the box (2);

wherein in the length direction (X), a depth of the second mounting groove (132) is T4, a depth of the third mounting groove (133) is T5; and a thickness of the first cable tie (121) is T1, and a thickness of the second cable tie (122) is T2, where 0<T4-T1<0.5 mm, and 0<T5-T2<0.5 mm.

2. The battery pack (M) according to claim 1, wherein in the height direction (Z), the end plate (13) has a first height L1, and the second mating part (135) has a second height L2, where L2≤1/3L1.

3. The battery pack (M) according to claim 1,

wherein the second mounting groove (132) has a first center line O1, the first center line O1 is parallel with the length direction (X), and in the height direction (Z), a first distance H1 is provided between the first center line O1 and a lower end face (139) of the end plate (13);

the third mounting groove (133) has a second center line O2, and a second distance H2 is provided between the second center line O2 and the lower end face (139), the second center line O2 is parallel with the length direction (X); and the end plate (13) has a first height L1; where H1≥2/3L1, and 3/4L1≥H2≥1/4L1.

4. The battery pack (M) according to claims 1-2, wherein the first cable tie (121) is made of a metal material, and the second cable tie is made of a plastic material.

5. An apparatus (D), battery cells (111) being used as a power supply, and the apparatus (D) comprising:

a power source, the power source being configured to provide driving force for the apparatus; and

the battery pack (M) according to any one of claims 1 to 4 configured to provide electric energy for the power source.

**Patentansprüche**

1. Batteriepack (M), umfassend einen Kasten (2) und ein Batteriemodul (1), wobei das Batteriemodul (1) in dem Kasten (2) fixiert ist, wobei das Batteriemodul (1) Folgendes umfasst:

eine Batteriezellenanordnungsstruktur (11), die eine Mehrzahl aufeinandergestapelter Batteriezellen (111) umfasst; und

eine Endplatte (13), wobei sich die Endplatte (13) in einer Längenrichtung (X) an einem Endteil der Batteriezellenanordnungsstruktur (11) befindet und die Endplatte (13) ein erstes Passteil (136) und ein zweites Passteil (135) umfasst; wobei sich das zweite Passteil (135) in einer Höhenrichtung (Z) des Batteriemoduls (1) unter dem ersten Passteil (136) befindet und eine Dicke des ersten Passteils (136) t1 ist, eine Dicke des zweiten Passteils (135) t2 ist, wobei t1 > t2, und eine Richtung der Dicke parallel zur Längenrichtung (X) ist;

wobei ein Montageträger (22) in einem Hohlraum (21) des Kastens (2) angeordnet ist und sich der Montageträger (22) in der Längenrichtung (X) des Batteriemoduls (1) an einem Endteil der Batteriezellenanordnungsstruktur (11) befindet;

das zweite Passteil (135) in der Längenrichtung (X) eine fünfte Bodenwand (135a) aufweist, die mit dem Montageträger (22) verbunden ist, wobei ein voreingestellter Spalt t in der Längenrichtung (X) zwischen der fünften Bodenwand (135a) und dem Montageträger (22) vorgesehen ist;

ein Stufenteil (137) zwischen dem ersten Passteil (136) und dem zweiten Passteil (135) ausgebildet ist und der Montageträger (22) in der Höhenrichtung (Z) an das Stufenteil (137) stößt; das erste Passteil (136) mit einer zweiten Montagenut (132) und einer dritten Montagenut (133) versehen ist und die zweite Montagenut (132) sich in der Höhenrichtung (Z) des Batteriemoduls (1) über der dritten Montagenut (133) befindet;

das Batteriepack (M) einen ersten Kabelbinder (121) und einen zweiten Kabelbinder (122) umfasst und der erste Kabelbinder (121) und der zweite Kabelbinder (122) beide eine Außenseite der Batteriezellenanordnungsstruktur (11) umgeben;

ein Abschnitt des ersten Kabelbinders (121) sich an der zweiten Montagenut (132) befindet und ein Abschnitt des zweiten Kabelbinders (122) sich an der dritten Montagenut (133) befindet; und

eine Zugfestigkeit des ersten Kabelbinders (121) größer als eine Zugfestigkeit des zweiten Kabelbinders (122) ist und ein Elastizitätsmodul des ersten Kabelbinders (121) größer als ein Elastizitätsmodul des zweiten Kabelbinders (122) ist;

der erste Kabelbinder (121) und der zweite Kabelbinder (122) in der Höhenrichtung (Z) des Batteriemoduls (1) angeordnet sind und der zweite Kabelbinder (122) in der Nähe eines Endes des Batteriemoduls (1) ist, das mit dem Kasten (2) fest verbunden ist;

wobei in der Längenrichtung (X) eine Tiefe der zweiten Montagenut (132) T4 ist, eine Tiefe der dritten Montagenut (133) T5 ist und eine Dicke des ersten Kabelbinders (121) T1 ist und eine Dicke des zweiten Kabelbinders (122) T2 ist, wobei 0 < T4 - T1 < 0,5 mm und 0 < T5 - T2 < 0,5 mm.

2. Batteriepack (M) nach Anspruch 1, wobei in der Höhenrichtung (Z) die Endplatte (13) eine erste Höhe L1 aufweist und das zweite Passteil (135) eine zweite Höhe L2 aufweist, wobei L2 ≤ 1/3 L1.

3. Batteriepack (M) nach Anspruch 1, wobei die zweite Montagenut (132) eine erste Mittellinie O1 aufweist, die erste Mittellinie O1 parallel zur Längenrichtung (X) ist und in der Höhenrichtung (Z) ein erster Abstand H1 zwischen der ersten Mittellinie O1 und der unteren Endfläche (139) der Endplatte (13) vorgesehen ist;

die dritte Montagenut (133) eine zweite Mittellinie O2 aufweist und ein zweiter Abstand H2 zwischen der zweiten Mittellinie O2 und der unteren Endfläche (139) vorgesehen ist, wobei die zweite Mittellinie O2 parallel zur Längenrichtung (X) ist; und
die Endplatte (13) eine erste Höhe L1 aufweist; wobei H1 ≥ 2/3 L1 und 3/4 L1 ≥ H2 ≥ 1/4 L1.

4. Batteriepack (M) nach Anspruch 1 bis 2, wobei der erste Kabelbinder (121) aus einem Metallmaterial hergestellt ist und der zweite Kabelbinder aus einem Kunststoffmaterial hergestellt ist.

5. Vorrichtung (D), wobei Batteriezellen (111) als Leistungsversorgung verwendet werden und die Vorrichtung (D) Folgendes umfasst:

eine Leistungsquelle, wobei die Leistungsquelle dazu ausgelegt ist, eine Antriebskraft für die Vorrichtung bereitzustellen; und
das Batteriepack (M) nach einem der Ansprüche 1 bis 4, das dazu ausgelegt ist, elektrische Energie für die Leistungsquelle bereitzustellen.

**Revendications**

1. Bloc-batterie (M), comprenant un boîtier (2) et un module de batterie (1), le module de batterie (1) étant fixé dans le boîtier (2), dans lequel le module de batterie (1) comprend :

une structure d'agencement d'éléments de batterie (11) comprenant une pluralité d'éléments de batterie (111) empilés les uns sur les autres ; et

une plaque d'extrémité (13), la plaque d'extrémité (13) étant située à une extrémité de la structure d'agencement d'éléments de batterie (11) dans une direction de longueur (X), et la plaque d'extrémité (13) comprenant une première partie d'accouplement (136) et une seconde partie d'accouplement (135) ;

dans lequel la seconde partie d'accouplement (135) est située sous la première partie d'accouplement (136) dans une direction de hauteur (Z) du module de batterie (1), et une épaisseur de la première partie d'accouplement (136) est t1, une épaisseur de la seconde partie d'accouplement (135) est t2, t1 > t2, une direction de l'épaisseur est parallèle à la direction de longueur (X) ;

dans lequel une barre de montage (22) est disposée dans une cavité (21) du boîtier (2), et dans la direction de la longueur (X) du module de batterie (1), la barre de montage (22) est située au niveau de la partie d'extrémité de la structure d'agencement d'éléments de batterie (11) ;

dans la direction de la longueur (X), la seconde partie d'accouplement (135) présente une cinquième paroi inférieure (135a) accouplée avec la barre de montage (22), un espace prédéfini t est prévu entre la cinquième paroi inférieure (135a) et la barre de montage (22) dans la direction de la longueur (X) ;

une partie en palier (137) est formée entre la première partie d'accouplement (136) et la seconde partie d'accouplement (135), et dans la direction de la hauteur (Z), la barre de montage (22) vient en butée contre la partie en palier (137) ;

la première partie d'accouplement (136) est pourvue d'une deuxième rainure de montage (132) et d'une troisième rainure de montage (133), et dans la direction de la hauteur (Z) du module de batterie (1), la deuxième rainure de montage (132) est située au-dessus de la troisième rainure de montage (133) ;

le bloc-batterie (M) comprend un premier serre-câble (121) et un second serre-câble (122), et le premier serre-câble (121) et le second serre-câble (122) entourent tous deux un côté externe de la structure d'agencement d'éléments de batterie (11) ;

une partie du premier serre-câble (121) est située au niveau de la deuxième rainure de montage (132), et une partie du second serre-câble (122) est située au niveau de la troisième rainure de montage (133) ; et

une résistance à la traction du premier serre-câble (121) est supérieure à une résistance à la traction du second serre-câble (122), et un module d'élasticité du premier serre-câble (121) est supérieur à un module d'élasticité du second serre-câble (122) ;

le premier serre-câble (121) et le second serre-câble (122) sont disposés dans la direction de hauteur (Z) du module de batterie (1), et le second serre-câble (122) est proche d'une extrémité du module de batterie (1) qui est reliée à demeure au boîtier (2) ;

dans lequel, dans la direction de la longueur (X), la profondeur de la deuxième rainure de montage (132) est T4, la profondeur de la troisième rainure de montage (133) est T5 ; et une épaisseur du premier serre-câble (121) est T1, et une épaisseur du second serre-câble (122) est T2, où $0 < T4 - T1 < 0,5$ mm, et $0 < T5 - T2 < 0,5$ mm.

2. Bloc-batterie (M) selon la revendication 1, dans lequel, dans la direction de la hauteur (Z), la plaque d'extrémité (13) a une première hauteur L1, et la seconde partie d'accouplement (135) a une seconde hauteur L2, où $L2 \leq 1/3$ L1.

3. Bloc-batterie (M) selon la revendication 1, dans lequel la deuxième rainure de montage (132) présente une première ligne centrale O1, la première ligne centrale O1 est parallèle à la direction de longueur (X), et dans la direction de hauteur (Z), une première distance H1 est fournie entre la première ligne centrale O1 et une face d'extrémité inférieure (139) de la plaque d'extrémité (13) ;

   la troisième rainure de montage (133) présente une seconde ligne centrale O2, et une seconde distance H2 est prévue entre la seconde ligne centrale O2 et la face d'extrémité inférieure (139), la seconde ligne centrale O2 est parallèle à la direction de longueur (X) ; et
   la plaque d'extrémité (13) a une première hauteur L1 ;
   où $H1 \geq 2/3$ L1, et $3/4 L1 \geq H2 \geq 1/4$ L1.

4. Bloc-batterie (M) selon les revendications 1 à 2, dans lequel le premier serre-câble (121) est réalisé en matériau métallique, et le second serre-câble est réalisé en matière plastique.

5. Appareil (D), des éléments de batterie (111) étant utilisés comme alimentation électrique, et l'appareil (D) comprenant :

une source d'alimentation, la source d'alimentation étant configurée pour fournir une force motrice à l'appareil ; et
le bloc-batterie (M) selon l'une quelconque des revendications 1 à 4 configuré pour fournir de l'énergie électrique à la source d'alimentation.

FIG. 1

FIG. 2

FIG. 3

FIG. 4

FIG. 5

FIG. 6

FIG. 7

FIG. 8

FIG. 9

FIG. 10

17

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2735041 A1
- CN 109273752 A

- JP 2010244894 A